# EUROPÄISCHE PATENTSCHRIFT

(11) **EP 1 653 048 B1**
(45) Veröffentlichungstag und Bekanntmachung des Hinweises auf die Patenterteilung: **20.11.2013**
(21) Anmeldenummer: 05017909.2
(22) Anmeldetag: 17.08.2005
(51) Int. Cl.: F01D 9/02, F02M 25/07, F02C 6/12

(54) **Abgasturbolader**
Turbocharger
Turbocompresseur

(30) Priorität: 24.08.2004 DE 102004040893
(43) Veröffentlichungstag der Anmeldung: 03.05.2006
(73) Patentinhaber: Bayerische Motoren Werke Aktiengesellschaft, 80809 München (DE)
(72) Erfinder: Wimmer, Rudolf, 4431 Haidershofen (AT); Eisterlehner, Leopold, 4594 Steinbach/Steyr (AT)

(56) Entgegenhaltungen:
- WO-A1-2004/031564
- DE-A1- 4 213 047
- DE-A1- 10 348 366
- JP-A- 57 159 950
- US-A- 6 026 791
- US-A1- 2003 178 013

## Beschreibung

Die Erfindung betrifft einen Abgasturbolader mit den Merkmalen aus dem Oberbegriff des Patentanspruchs 1.

Sie geht von der deutschen Offenlegungsschrift DE 103 48 366 A1 aus. In dieser ist ein Verfahren zum Betrieb einer direkt einspritzenden DieselBrennkraftmaschine mit einem Einlasstrakt, einem Auslasstrakt und mit einem Abgasturbolader beschrieben. Die Brennkraftmaschine ist von einem Abgasturbolader, der eine abgasbetriebene Turbine und einen durch die Turbine angetriebenen Verdichter aufweist, aufgeladen. Stromaufwärts des Verdichters ist auf der Einlassseite ein Ladeluftkühler angeordnet. Weiter ist ein Hochdruck-Abgasrückführsystem mit einer Abgasrückführleitung zwischen dem Abgasstrang und dem Ansaugtrakt vorgesehen. Das Hockdruck-Abgasrückführsystem weist einen Abgasrückführkühler und ein Abgasrückführventil auf. Abhängig von der Druckdifferenz zwischen dem Abgasstrang und dem Ansaugtrakt kann in der Abgasrückführleitung auch eine Abgaspumpe vorgesehen sein, um die Abgasrückführrate zu steuern bzw. zu erhöhen. Neben dem Hochdruck-Abgasrückführsystem ist weiter ein Niederdruck-Abgasrückführsystem stromaufwärts der Turbine und stromabwärts des Verdichters vorgesehen. Stromabwärts eines Partikelfilters in der Abgasleitung zweigt eine zweite Abgasrückführleitung ab und mündet stromabwärts des Verdichters in den Ansaugtrakt. In der zweiten Abgasrückführleitung sind ein Abgasrückführkühler und ein Abgasrückführventil angeordnet. Zur Steuerung der Abgasrückführrate ist in der Abgasleitung stromabwärts der Abzweigung ein Abgasventil angeordnet. Ein anderer Abgasturbolader gemäß dem Stand der Technik ist aus JP 5 715 990 A bekannt.

Mit der beschriebenen Ausgestaltung lässt sich ein Verfahren zum Betrieb einer Brennkraftmaschine realisieren, mit dem einerseits vom unteren Teillastbereich bis zum Volllastbereich minimale Stickoxid- und Russemissionen auftreten und andererseits ein hoher Wirkungsgrad erreicht wird.

Aufgabe der vorliegenden Erfindung ist es, den Wirkungsgrad des Abgasturboladers nochmals zu steigern.

Diese Aufgabe wird durch das Merkmal im kennzeichnenden Teil des Patentanspruchs 1 dadurch gelöst, dass die Abgasrückführleitung im Gehäuse weitgehend spiralförmig ausgebildet ist.

Durch den vorgeschlagenen Aufbau wird aufgrund von einer Vordrallerzeugung durch den Abgasrückführstrom die Dynamik durch die Bereitstellung höherer Turboladerdrehzahlen im Teillastbereich verbessert. Darüber hinaus wird der Gesamtwirkungsgrad des Abgasturboladers im Teillastbereich bei hoher Abgasrückführrate verbessert. Weiter stellt der vorgeschlagene Aufbau eine kompakte Realisierung der Abgasrückführung in den Reinluftstrom durch Integration in das Verdichtergehäuse dar.

Durch diese kompakte Einleitung des Abgases in das Verdichtergehäuse wird die Ausscheidung von Kondensat aus dem heißen Verbrennungsgas bei ungünstigen Temperaturbedingungen minimiert. Durch die kurze Verweilzeit des Abgases im Verdichtergehäuse können sich nur kleine Tröpfchen bilden, welche keine Beschädigungen am Verdichterrad verursachen. Durch die Ausgestaltung des Spiralkanals im Verdichtergehäuse werden mögliche Kondensatmengen durch den aerodynamischen Staudruck des Hauptluftstromes an der tiefsten Stelle des Verdichtergehäuses gehalten, welche nach "heißen" Betriebsbedingungen wieder verdunstet werden können.

Die tangentiale Einleitung des Abgases in den Verdichterraum gem. Patentanspruch 2 unterstützt die zuvor genannten Vorteile.

Alternativ kann nach Anspruch 3 die Einmündungsrichtung der Abgasrückführleitung in den Verdichterraum auch eine axiale Komponente umfassen. In diesem Fall führt die Einleitstelle in den Hauptstrom vorteilhafterweise in ein besonders großes Volumen. Dadurch wird der Hauptstrom nur minimal eingeschnürt und somit ein reduzierter Ansaugunterdruck realisiert.

Gemäß Patentanspruch 4 kann ein Strömungsleitelement vorgesehen sein, das den Drall nochmals erhöht.

Im Folgenden ist die Erfindung anhand eines bevorzugten Ausführungsbeispieles in vier Figuren näher erläutert.
- Fig. 1: zeigt schematisch die Einbindung eines Abgasturboladers in einen Ansaugtrakt und einen Abgasstrang einer Brennkraftmaschine gemäß dem zitierten Stand der Technik,
- Fig. 2: zeigt einen Schnitt durch einen Verdichterraum eines erfindungsgemäß ausgestalteten Abgasturboladers,
- Fig. 3a: zeigt einen Meridianschnitt durch einen Verdichterraum eines weiteren erfindungsgemäß ausgestalteten Abgasturboladers und
- Fig. 3b: zeigt einen Längsschnitt durch einen Verdichterraum des weiteren erfindungsgemäß ausgestalteten Abgasturboladers.

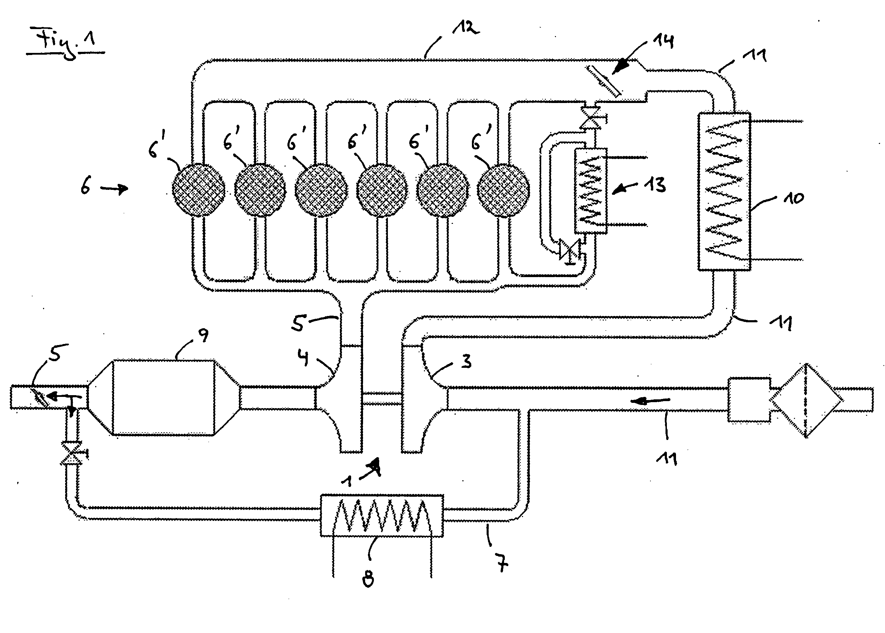

Fig. 1 zeigt schematisch dargestellt eine Brennkraftmaschine 6 mit ihren sechs Zylindern 6' sowie einem Abgasstrang 5 und einem Ansaugtrakt 11. Der Ansaugtrakt 11 und der Abgasstrang 5 sind über einen Abgasturbolader 1 miteinander verbunden. Die Ansaugluft strömt, durch Pfeile dargestellt, in den Ansaugtrakt 11 und anschließend in einen Verdichterraum 3', in dem ein Verdichter 3 des Abgasturboladers 1 angeordnet ist. Weiter strömt die Ansaugluft durch den Ansaugtrakt 11 in einen zweiten Wärmetauscher 10, einen Ansaugluftkühler und anschließend in einen Sammler 12, von dem ausgehend der Ansaugluftstrom auf die einzelnen Zylinder 6' aufgeteilt wird.

Das verbrannte Abgas wird anschließend in den Abgasstrang 5 gefördert, in dem das Abgas zuerst einen Abgaskrümmer passiert und von dort weiter in einen Turbinenraum 4', in dem eine Turbine 4 des Abgasturboladers 1 angeordnet ist. Nach dem Turbinenraum 4' wird das Abgas durch einen Katalysator 9 gefördert, und anschließend in zwei Teilabgasströme aufgeteilt. Der erste Teilabgasstrom verlässt den Abgasstrang 5 als Abgas in die Umgebungsluft und der zweite Teilabgasstrom wird durch eine Niederdruck-Abgasrückführleitung 7, in der ein erster Wärmetauscher 8, ein Niederdruck-Abgasrückführkühler, angeordnet ist, in Strömungsrichtung vor dem Verdichter 3 in den Ansaugtrakt 11 rückgeleitet. Die Aufteilung des Abgases in die zwei Teilabgasströme kann mittels eines Ventils geregelt werden.

Neben der Niederdruck-Abgasrückführung verfügt die schematisch dargestellte Brennkraftmaschine 6 noch über eine zweite, eine sog. Hochdruck-Abgasrückführleitung 13, die vom Abgaskrümmer abzweigt und Abgas vor dem Sammler 12 in den Ansaugtrakt 11 rückführt. Die Menge des in der Hochdruck-Abgasrückführleitung 13 rückgeführten Abgases wird über ein Mengenstellglied 14 im Ansaugtrakt 11 geregelt.

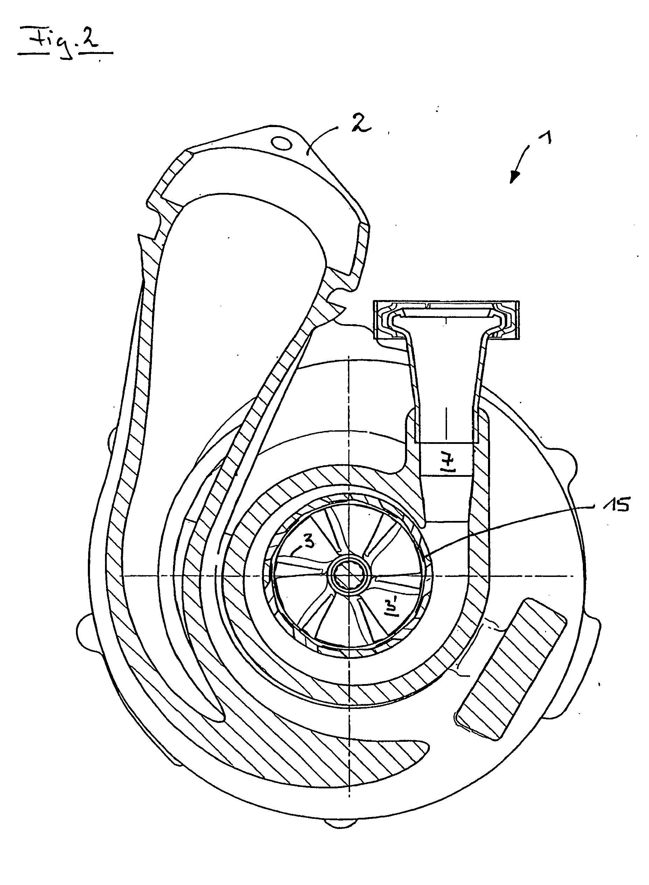

In Fig. 2 ist ein Schnitt durch den Verdichterraum 3' dargestellt. Für die gleichen Bauelemente gelten in den Fig. 1 und 2 die gleichen Bezugszeichen.

In dem Verdichterraum 3' ist der Verdichter 3 drehbar angeordnet. Wie in Fig. 1 dargestellt, geht die Abgasrückführleitung 7 in etwa radial in das Gehäuse 2 über, um sich dann, wie in Fig. 2 erkennbar, im Gehäuse 2 spiralförmig in den Verdichterraum 3' zu erstrecken. Das Mündungsende der Abgasrückführleitung 7 verläuft weitgehend tangential in den Verdichterraum 3'. Ferner ist koaxial zum Verdichter 3 ein Strömungsleitelement 15 angeordnet, mit dem der durch die spiralförmig ausgebildete Abgasrückführleitung 7 erzeugte Drall nochmals verstärkt wird.

Im Folgenden ist die Funktionsweise des Abgasturboladers 1 erläutert:

Im Zuge der Niederdruck-Abgasrückführung ist es möglich, bzw. erforderlich, aufgrund der benötigten NOx-Reduzierung, Abgasrückführraten von bis zu 70 % im Teillastbetrieb zu realisieren. Die erfindungsgemäße Konstruktion mittels Spiralkanal der Abgasrückführleitung 7 in Verbindung mit dem Strömungsleitelement 15, eine sog. Vordrallbuchse, unmittelbar vor dem Verdichter 3 ermöglicht neben einer kompakten Bauweise auch die vordrallbehaftete Einleitung des rückgeführten Abgasstroms vor den Verdichter 3.

Durch die vordrallbehaftete Anströmung des Verdichters 3 kommt es zu einer Steigerung der Turboladerdrehzahl im Betrieb mit hoher Abgasrückführrate. Nachdem die Abgasrückführung vor allem im Teillastbereich erfolgt, kommt es bei einer Beschleunigung aus dem Teillastbereich in den Volllastbereich zu einem schnelleren Erreichen der geforderten Turboladerdrehzahl und daher zu einer rascheren Bereitstellung von Drehmoment und zu einer Steigerung der Dynamik.

Die Vordrallerzeugung mittels Spiralkanal im Gehäuse 2 und Strömungsleitelement 15 hat zudem zur Folge, dass kein Vorleitapparat (= Strömungswiderstand) benötigt wird, der im Hauptansaugkanal vor dem Verdichter 3 untergebracht ist. Zudem befinden sich keine beweglichen Teile im Ansaugkanal des Abgasturboladers 1, womit das Risiko für Beschädigungen am Verdichter 3 erheblich verkleinert wird.

Die spiralförmige Einleitung des Abgasrückführstroms in den Hauptansaugstrom ermöglicht zudem eine gezielte Vordrallerzeugung in den äußeren Randzonen des Ansaugstroms im Verdichterraum 3'. Durch die hohen Umfangsgeschwindigkeiten an den Verdichterradaußenkanten ergibt sich so eine maximal effiziente Vordrallerzeugung zur Erhöhung der Turboladerdrehzahl im Teillastbereich. Weiter wird durch die über den gesamten Umfang verteilte Einleitung des Abgasstroms eine maximal gute Durchmischung von Abgas und Reinluft ermöglicht.

Durch die erfindungsgemäße Ausgestaltung wird aufgrund von Vordrallerzeugung durch den Abgasrückführstrom die Dynamik durch die Bereitstellung höherer Turboladerdrehzahlen im Teillastbereich verbessert. Ferner führt die erfindungsgemäße Ausgestaltung zur Verbesserung des Gesamtwirkungsgrades im Teillastbereich, insbesondere bei hoher Abgasrückführrate. Ferner ist eine kompakte Realisierung der Abgasrückführeinleitung in den Reinluftstrom durch Integration in das Gehäuse 2 ermöglicht.

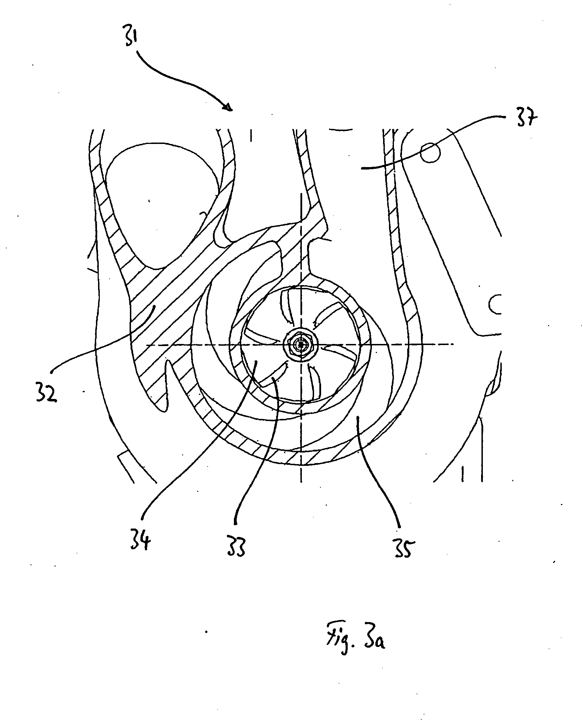

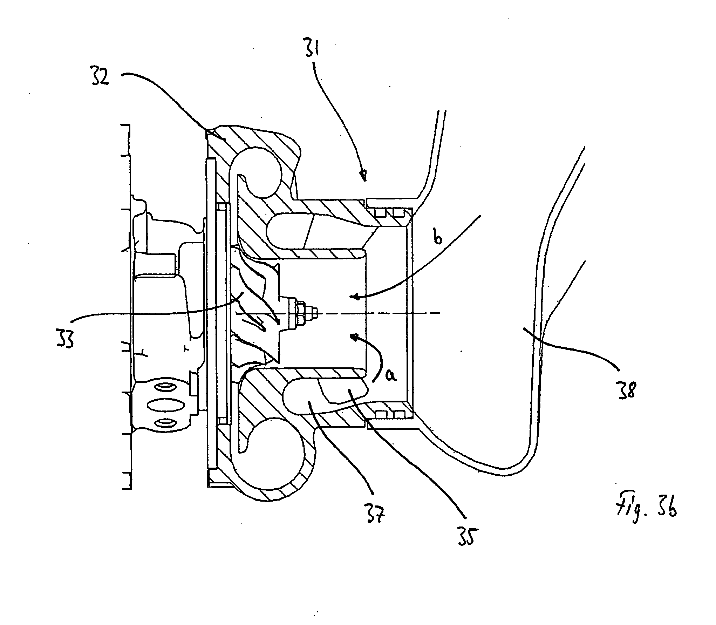

Figur 3a zeigt einen Meridianschnitt durch einen Verdichterraum 34 eines weiteren erfindungsgemäß ausgestalteten Abgasturboladers 31, ein Längsschnitt ist in Figur 3b dargestellt.

In einem Verdichtergehäuse 32 ist der Verdichterraum 34 ausgebildet, in welchem ein Verdichterrad 33 drehbar angeordnet ist. Mit 37 ist ein Einleitraum bezeichnet, in welchen beispielsweise Blow-by-Gase des Kurbelgehäuses oder rückgeführtes Abgas eingeleitet werden können oder an welchen ein Verdichterbypass angeschlossen werden kann.

Insbesondere bezüglich der Funktionsweise des Abgasturboladers 31 wird auf die Beschreibung zu den Figuren 1 und 2 verwiesen. Auch der Abgasturbolader 31 weist in Verbindung mit der Abgasrückführleitung 37 ein Strömungsleitelement 35 auf. Gegebenenfalls kann jedoch auf das Strömungsleitelement 35 verzichtet werden.

Gegenüber der vorstehend beschriebenen Ausführungsform umfasst die Einmündungsrichtung der Abgasrückführleitung 37 in den Verdichterraum 34 nicht nur eine radiale, sondern auch eine axiale Komponente, wobei der Anteil der axiale Komponente von 0 bis 100% variieren kann. Wie aus Figur 3b ersichtlich,strömen ausgehend vom Einleitraum 37 das eingeleitete Volumen entsprechend der Pfeilrichtung a und der vom Reinluftrohr 38 kommende Strom entsprechend der Pfeilrichtung b zum Verdichterrad 33.

Die Einleitstelle führt in den aus dem Reinluftrohr 38 einströmenden großvolumigen Hauptstrom b, so dass der Hauptstrom b nur minimal eingeschnürt und der Ansaugunterdruck reduziert wird.

### Bezugszeichenliste

- 1: Abgasturbolader
- 2: Gehäuse
- 3: Verdichter
- 3': Verdichterraum
- 4: Abgasturbine
- 4': Turbinenraum
- 5: Abgasstrang
- 6: Brennkraftmaschine
- 6': Zylinder
- 7: Niederdruck-Abgasrückführleitung
- 8: Erster Wärmetauscher
- 9: Katalysator
- 10: Zweiter Wärmetauscher
- 11: Ansaugtrakt
- 12: Sammler
- 13: Hochdruck-Abgasrückführleitung
- 14: Mengenstellglied
- 15: Strömungsleitelement
- 31: Abgasturbolader
- 32: Verdichtergehäuse
- 33: Verdichterrad
- 34: Verdichterraum
- 35: Strömungsleitelement
- 37: Einleitraum
- 38: Reinluftrohr

## Patentansprüche

1. Abgasturbolader (1) mit einem Gehäuse (2) dessen Innenraum einen Verdichterraum (3') und einen Turbinenraum (4') umfasst, wobei im Verdichterraum (3') ein Verdichter (3) und im Turbinenraum (4') eine Abgasturbine (4) angeordnet ist, wobei der Turbinenraum (4') einen Abschnitt eines Abgasstrangs (5) einer Brennkraftmaschine (6) bildet und wobei der Abgasstrang (5) in Abgasströmungsrichtung nach der Abgasturbine (4) über eine Abgasrückführleitung (7), die sich durch das Gehäuse (2) erstreckt, mit einer Niederdruckseite des Verdichterraums (3') verbunden ist,
**dadurch gekennzeichnet, dass** die Abgasrückführleitung (7) im Gehäuse (2) weitgehend spiralförmig ausgebildet ist.

2. Abgasturbolader nach Patentanspruch 1,
**dadurch gekennzeichnet, dass** die Abgasrückführleitung (7) weitgehend tangential in den Verdichterraum (3') mündet.

3. Abgasturbolader nach Patentanspruch 1,
**dadurch gekennzeichnet, dass** die Einmündungsrichtung der Abgasrückführleitung (7) in den Verdichterraum (3') eine axiale Komponente umfasst.

4. Abgasturbolader nach einem der Patentansprüche 1 bis 3,
**dadurch gekennzeichnet, dass** im Verdichterraum (3') ein Strömungsleitelement vorgesehen ist.

## Claims

1. A turbocharger (1) having a casing (2) containing a compressor chamber (3') and a turbine chamber (4'), wherein a compressor (3) is disposed in the compressor chamber (3') and an exhaust-gas turbine (4) is disposed in the turbine chamber (4'), wherein the turbine chamber (4') is a portion of a branch (5) of an exhaust system in an internal combustion engine (6) and whereby the branch (5), in the direction of flow of the exhaust gas behind the exhaust-gas turbine (4), is connected to a low-pressure side of the compressor chamber (3') by a return line (7) extending through the casing (2),
**characterised in that** the return line (7) in the casing (2) is substantially in the form of a spiral.

2. A turbocharger according to claim 1, **characterised in that** the return line (7) opens substantially tangentially into the compressor chamber (3').

3. A turbocharger according to claim 1, **characterised in that** the direction at which the return line (7) opens into the compressor chamber (3') has an axial component.

4. A turbocharger according to any of claims 1 to 3,
**characterised in that** a flow guide element is provided in the compressor chamber (3').

## Revendications

1. Turbocompresseur de gaz d'échappement (1) comportant un carter (2) dont le volume interne renferme une chambre de compresseur (3') et une chambre de turbine (4'), un compresseur (3) étant monté dans la chambre de compresseur (3') et une turbine de gaz d'échappement (4) étant montée dans la chambre de turbine (4'), la chambre de turbine (4') formant un tronçon de la ligne des gaz d'échappement (5) d'un moteur à combustion interne (6) et cette ligne de gaz d'échappement (5) étant reliée dans le sens de circulation des gaz d'échappement, en aval de la turbine de gaz d'échappement (4) et par l'intermédiaire d'une conduite de retour des gaz d'échappement (7) qui s'étend dans le carter (2) avec le côté basse pression de la chambre de compresseur (3'),
**caractérisé en ce que**
la conduite de retour des gaz d'échappement (7) est réalisée dans le carter (2) essentiellement en forme de la spirale.

2. Turbocompresseur de gaz d'échappement conforme à la revendication 1,
**caractérisé en ce que**
la conduite de retour des gaz d'échappement (7) débouche essentiellement tangentiellement dans la chambre de compresseur (3').

3. Turbocompresseur de gaz d'échappement conforme à la revendication 1,
**caractérisé en ce que**
la direction dans laquelle débouche la conduite de retour des gaz d'échappement (7) dans la chambre de compresseur (3') comporte une composante axiale.

4. Turbocompresseur de gaz d'échappement conforme à l'une des revendications 1 à 3,
**caractérisé en ce qu'**
un élément de guidage de l'écoulement est monté dans la chambre de compresseur (3').
